# EUROPEAN PATENT APPLICATION

(11) **EP 1 405 784 A1**
(43) Date of publication of application: **07.04.2004**
(21) Application number: 02102416.1
(22) Date of filing: 04.10.2002
(51) Int. Cl.: B62J 6/12

(54) **Electrical generator arranged in a wheel hub**

(71) Applicant: Tsai, Chin-Sung, Hsin Chuang City, Taipei Hsien (TW)
(72) Inventor: Hirakui, Kenzo, Yaita-City, 329-2134 (JP)
(74) Representative: Hooiveld, Arjen Jan Winfried

(57) **Abstract**

An electrical generator in a wheel hub (10) includes a stator assembly (3), a rotor assembly (2), a gear assembly (4), a rectifying circuit box and a cap (60). The stator assembly (3) is securely mounted in a wheel hub. The rotor assembly (2) is rotatably mounted in the hub around the stator assembly (3). The gear assembly (4) is mounted between the rotor assembly (2) and the hub to increase the rotation speed of the rotor assembly (2) when the hub rotates. The rectifying circuit box is securely mounted inside the hub to rectify current from the electrical generator. The cap (60) is securely attached to a side of the hub to enclose the stator assembly (3), the rotor assembly (2), the gear assembly (4) and the rectifying circuit box in the hub.

## Description

### 1. Field of the Invention

The present invention relates to a electrical generator in a wheel hub, and more particularly to a electrical generator that is able to generate stable electricity without regard to the rotation speed of the wheel hub.

### 2. Description of Related Art

A conventional electrical generator in a wheel hub of a bicycle, a wheelchair and the like usually is a DC electrical generator and connected directly to a light bulb. Therefore, when the rotation speed of the wheel is slow, the light bulb shines dimly, and when the rotation speed of the wheel is high, the light bulb shines brightly. The brightness of the light bulb is directly proportional to the rotational speed of the wheel, and, at slow speeds, the light bulb blinks. To overcome the shortcomings and have the bulb shine at a constant brightness, different parts must be added to the electrical generator, which increases the weight of the electrical generator and results in the user having to "peddle" harder to make the electrical generator function normally. Furthermore, The conventional electrical generator is in contact with the wheel surface, and the user must exert additional effort to keep the wheel rotating even when the light is turned off. Also, parts in the conventional electrical generator easily wear out due to the lateral forces applied to the generator, which are generated by the generator's contact with the wheel surface.

To overcome the shortcomings, the present invention provides an improved electrical generator mounted in a wheel hub to mitigate and obviate the aforementioned problems.

The primary objective of the present invention is to provide an improved electrical generator in a wheel hub. The electrical generator has a stator assembly securely mounted in the hub and a rotor assembly rotatable with respect to the hub such that when the hub rotates, the stator rotates simultaneously with the hub, which induces electricity from the stator.

Another objective of the present invention is to have an acceleration gear assembly mounted in the hub so that even when the rotational speed of the hub is low, the output from the rotor is increased and the electrical output from the electrical generator is increased.

To accomplish the foregoing objective, the electrical generator includes a rotor rotatably mounted in the hub, a stator rigid with respect to the hub and an acceleration gear assembly connected to the rotor so that the rotational speed of the rotor is increased and the electricity induced is also increased.

Other objectives, advantages and novel features of the invention will become more apparent from the following detailed description when taken in conjunction with the accompanying drawings.

### IN THE DRAWINGS

Fig. 1 is an exploded perspective view of the electrical generator in a wheel hub in accordance with the present invention;
Fig. 2 is a cross sectional front plan view of the electrical generator in Fig. 1;
Fig. 3 is a cross sectional top plan view of the electrical generator in Fig. 1;
Fig. 4 is a side plan view of the acceleration gear assembly in the electrical generator in Fig. 1;
Fig. 5 is a side plan view of a wheel hub with the electrical generator in Fig. 1 installed;
Fig. 6 is a perspective view of the power supply device of the present invention;
Fig. 7 is an exploded perspective view of the power supply device in Fig. 6; and
Fig. 8 is a circuit diagram of the electrical generator and the power supply device of the present invention.

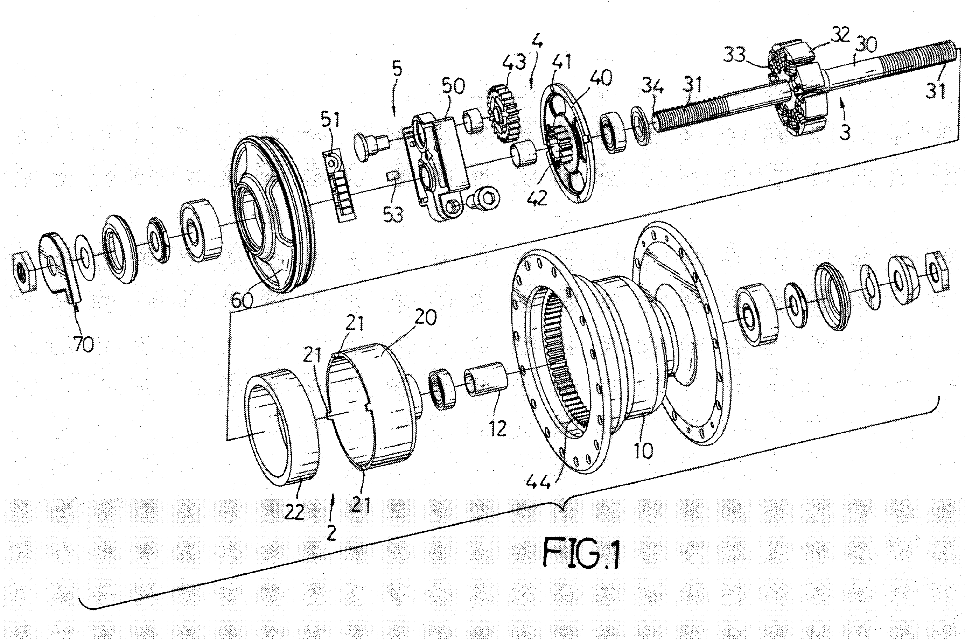

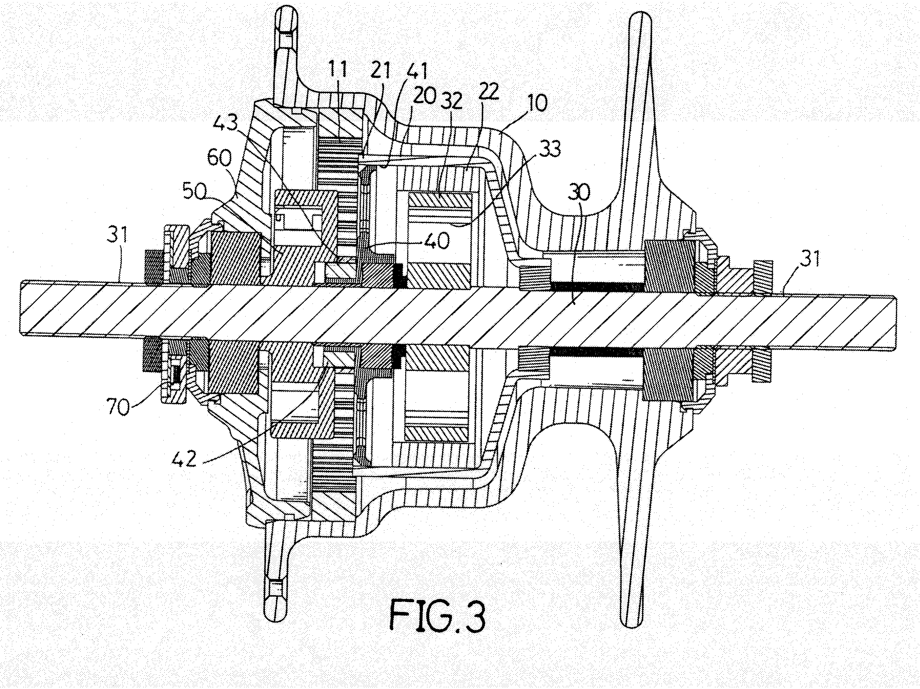

With reference to Figs. 1, 2 and 3, an electrical generator in a wheel hub (10) in accordance with the present invention comprises a rotor assembly (2), a stator assembly (3), a gear assembly (4), a rectifier (5), a cap (60) and a terminal (70). A hub (10) used in a bicycle, a wheelchair or the like is presented to have a sleeve (12).

The rotor assembly (2) includes a circular hollow housing (20) and a magnet (22). The housing (20) has multiple tongues (21) integrally formed on a peripheral edge of the housing (20). The magnet (22) is interference fitted inside the housing (20).

The stator assembly (3) includes a bar (30), multiple cores (32), a coil (33) and a keyway (34). The bar (30) has an outer periphery and two threaded ends (31) and is adapted to be supported by a bracket of a bicycle or the like. The cores (32) are made of silicone steel and are securely attached around and extend radially out from the outer periphery of the bar (30). The coil (33) is wrapped around the cores (32) in a "three phase wrapping manner." The keyway (34) is defined longitudinally on the outer periphery in one of the threaded ends (31) of the bar (30).

The gear assembly (4) includes a disk (40), a first gear (42), a second gear (43) and a third gear (44). The disk (40) has a side face and multiple notches (41) defined in an outer peripheral edge of the disk (40). The notches (41) correspond to the tongues (21) on the housing (20). The first gear (42) is securely attached to the side face of the disk (40). The third gear (44) is securely attached to an inner face of the hub (10).

The rectifier (5) includes a rectifying circuit box (50) to receive therein a circuit board (51), the second gear (43) being rotatable with respect to the rectifying circuit box (50) and a key (53) extending through the rectifying circuit box (50) to correspond to the keyway (34) of the bar (30).

The cap (60) is provided to close one side of the hub (10) and configured to allow the bar (30) to extend through the cap (60). The terminal (70) is provided on one side of the cap (60) so as to transmit the induced electricity out for application.

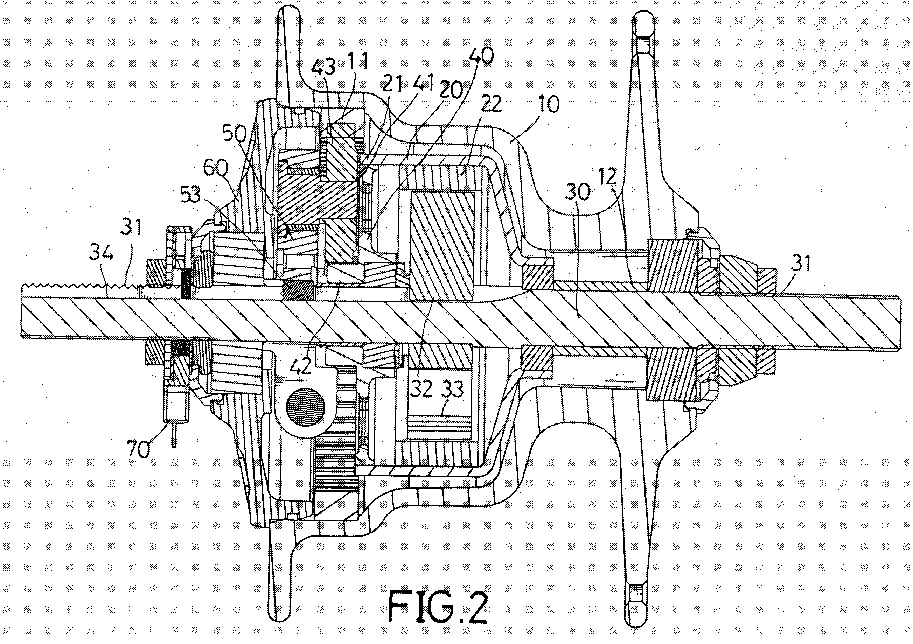

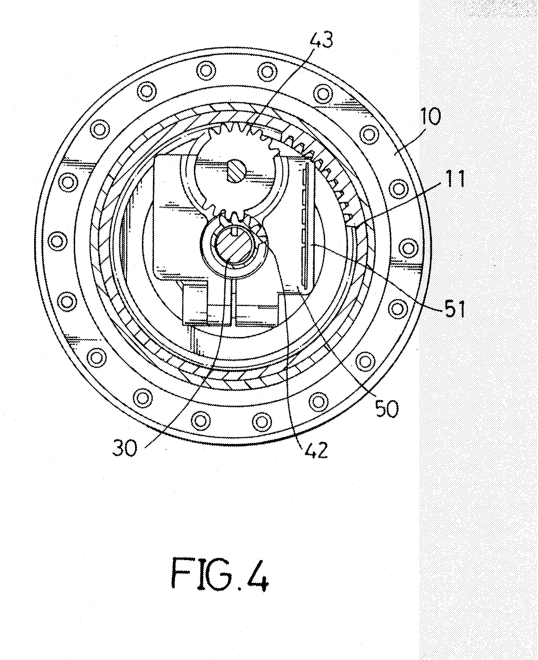

With reference to Figs. 2, 3 and 4, when the foregoing described elements are assembled, it is noted that the stator assembly (3) is securely received in the hub (10) due to the bar (30) being securely supported by the bracket of the bicycle or the like. The rotor assembly (2) is received in the hub (10). After the tongues (21) are received in the corresponding notches (41) in the disk (40), the housing (20) together with the magnet (22) is securely engaged with the disk (40). Because the second gear (43) meshes with the third gear (44) after the rectifying circuit box (50) is mounted in the hub (10) and the second gear (43) meshes with the first gear (41), the rotation of the hub (10) rotates the disk (40) at a rotation speed greater than the rotation speed of the hub (10). Further, because the disk (40) is securely connected to the housing (20) and the magnet (22) is securely mounted in the housing (20), the rotation speed of the rotor assembly (2) inside the hub (10) is also greater than the rotation speed of the hub (10). Thus, even when the hub (10) is rotating at a low speed, the rotation speed of the magnet (22) will be magnified due the mechanical advantage of the gear assembly (4) and the induced electricity is also magnified. The circuit board (51) inside the rectifying circuit box (50) keeps the output voltage stable.

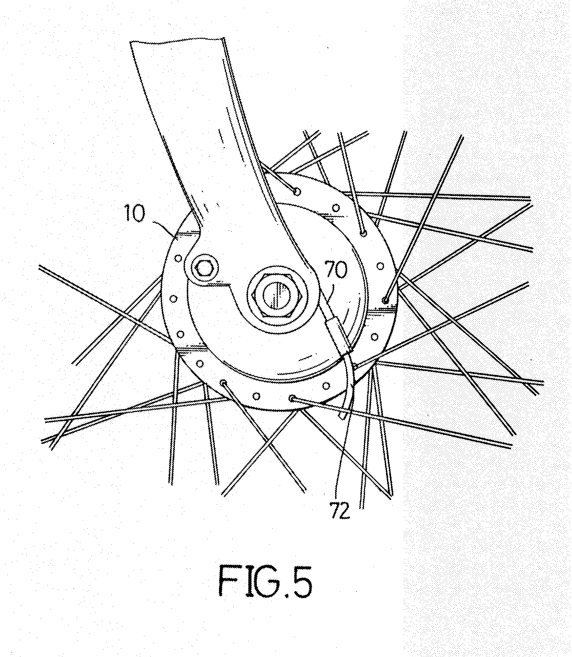

With reference to Fig. 5, the magnified induced electricity is then transmitted out of the hub (10) by the terminal (70) for application.

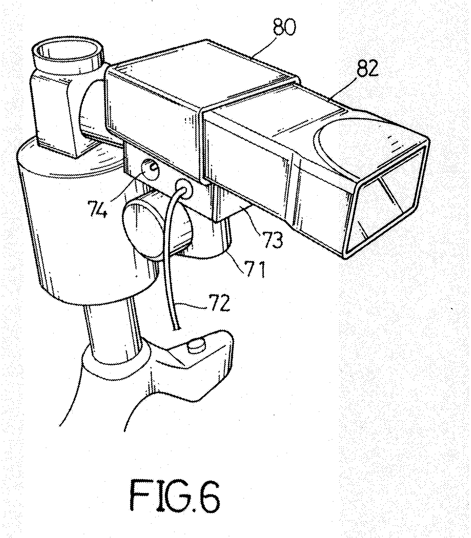

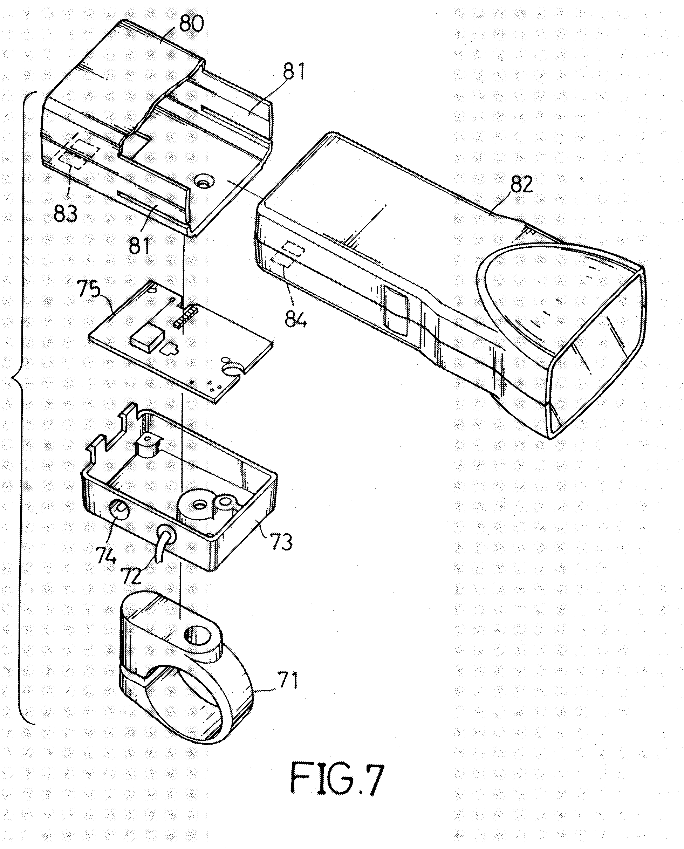

With reference to Figs. 6 and 7, after the electricity is generated by the relative movement between the rotor assembly (2) and the stator assembly (3), the electricity is transmitted out of the electrical generator by the terminal (70) via a wire (72). The wire (72) is connected to a junction box (73) that is supported by a clamping device (71) securely connected to the frame of the bicycle or the like. The junction box (73) has a power socket (74) for providing electricity to electrical appliances such as a cellular phone, PDA, etc. and a chip (75) inside the junction box (73). On top of the junction box (73), a mounting bracket (80) is securely mounted and has two resilient plates (81) oppositely formed on side faces of the mounting bracket (80) and a contact plate (83) formed on an inner bottom face of the mounting bracket (80). An illuminating device (82) is detachably received in the mounting bracket (80) and has a second contact plate (84) formed on a bottom face of the illuminating device (82) to correspond to the contact plate (83) of the mounting bracket (80). Therefore, the illuminating device (82) is lit by the electricity from the electrical generator via the wire (72).

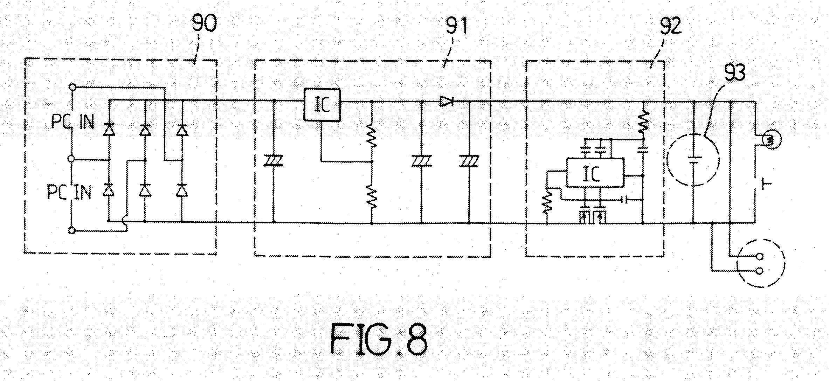

With reference to Fig. 8, the circuit of the present invention includes a rectifying loop (90), a voltage regulating loop (91), an over current prevention loop (92) and a rechargeable battery (93) so that the power from the electrical generator is able to be applied to the illuminating device (82).

It is to be understood, however, that even though numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A electrical generator in combination with a hub, the electrical generator comprising:
a stator assembly securely mounted in the hub and having a bar extending through the hub, the stator assembly being stationary relative to the hub;
a rotor rotatably received in the hub and mounted around the stator assembly;
a gear assembly provided between the rotor assembly and the hub to increase rotation speed of the rotor assembly when the hub rotates;
a rectifying circuit box securely received inside the hub to rectify current from the electrical generator; and
a cap securely attached to a side of the hub to enclose the stator assembly, the rotor assembly, the acceleration gear assembly and the rectifying circuit box in the hub.

2. The electrical generator as claimed in claim 1, wherein the bar has cores mounted around the bar and coils wrapped on each of the cores in a three phase wrapping manner.

3. The electrical generator as claimed in claim 2, wherein a rectifier is provided inside the rectifying circuit box to rectify current from the electrical generator.

4. The electrical generator as claimed in claim 3, wherein the cores that are mounted around the bar are made of silicone steel and have a wire connected to a terminal.

5. The electrical generator as claimed in claim 1, wherein the gear assembly comprises a third gear securely mounted on an inner face of the hub, a first gear attached to a side of the disk and a second gear sandwiched between the annular gear and the first gear, the second gear being meshed with the annular gear and being rotatably mounted in the rectifying circuit box.

6. The electrical generator as claimed in claim 3, wherein the gear assembly comprises a third gear securely mounted on an inner face of the hub, a first gear attached to a side of the disk and a second gear sandwiched between the annular gear and the first gear, the second gear being meshed with the annular gear and being rotatably mounted in the rectifying circuit box.

7. The electrical generator as claimed in claim 4, wherein the gear assembly comprises a third gear securely mounted on an inner face of the hub, a first gear attached to a side of the disk and a second gear sandwiched between the annular gear and the first gear, the second gear being meshed with the annular gear and being rotatably mounted in the rectifying circuit box.

8. The electrical generator as claimed in claim 7, wherein the stator assembly includes a housing and a magnet securely attached to an inner face of the housing.

9. An electrical generator in combination with a power supply unit, the electrical generator comprising:
a stator assembly securely received in the hub and having a bar extending through the hub, the stator assembly being stationary relative to the hub;
a rotor rotatably received in the hub and mounted around the stator assembly;
an acceleration gear assembly provided between the rotor assembly and the hub to increase rotation speed of the rotor assembly when the hub rotates;
a rectifying circuit box securely received inside the hub to rectify current from the electrical generator; and
a cap securely attached to a side of the hub to enclose the stator assembly, the rotor assembly, the acceleration gear assembly and the rectifying circuit box in the hub,
the power supply unit comprising:
a terminal connected to the stator assembly and having a wire extending outward from the terminal;
a junction box connected to a clamping device that is adapted to be securely connected to a bracket, the junction box having a power socket for providing electricity from the wire to electrical appliances and a chip;
a mounting bracket securely attached to the junction box and having two resilient plates oppositely formed on side faces of the mounting bracket and a contact plate formed on an inner bottom face of the mounting bracket; and
an illuminating device detachably received inside the mounting bracket and having a second contact plate corresponding to the contact plate of the mounting bracket so that the power from the wire is able to light the illuminating device.

10. The electrical generator in combination with a power supply unit as claimed in claim 9, wherein the mounting bracket has a rechargeable battery recharged by the electricity from the wire.

11. A power supply unit comprising :
a terminal connected to the stator assembly and having a wire extending outward from the terminal;
a junction box connected to a clamping device that is adapted to be securely connected to a bracket, the junction box having a power socket for providing electricity from the wire to electrical appliances and a chip;
a mounting bracket securely attached to the junction box and having two resilient plates oppositely formed on side faces of the mounting bracket and a contact plate formed on an inner bottom face of the mounting bracket; and
an illuminating device detachably mounted inside the mounting bracket and having a second contact plate corresponding to the contact plate of the mounting bracket so that the electricity from the wire is able to light the illuminating device.

12. The power supply unit as claimed in claim 11, wherein the mounting bracket has a rechargeable battery recharged by the power from the wire.
